# EUROPEAN PATENT APPLICATION

(11) **EP 4 282 536 A1**
(43) Date of publication of application: **29.11.2023**
(21) Application number: 22174987.2
(22) Date of filing: 24.05.2022
(51) Int. Cl.: B02C 19/00, B02C 23/02, B02C 23/08, B64D 11/00

(54) **SORTING AND COMPACTING SYSTEM FOR AN AIRCRAFT**

(71) Applicant: B/E Aerospace, Inc., Winston-Salem, NC 27105 (US)
(72) Inventor: PEREZ CAMACHO, Manuel, Nieuwegein (NL); JASPERS, Marcus Michaël Cornelis, Woerden (NL)
(74) Representative: Dehns

(57) **Abstract**

There is provided a system and method for sorting and compacting waste on an aircraft. The system includes a waste management system (100, 200, 300, 400) and the waste management system (100, 200, 300, 400) comprises at least one opening (110, 206, 314, 316, 410) to receive waste (104, 204, 402), at least one crushing chamber (114, 212, 302, 408) configured to crush the waste, and at least one collecting chamber (120, 218, 304, 418) configured to collect the crushed waste provided by the at least one crushing chamber.

## Description

### TECHNICAL FIELD

Generally, this disclosure relates to sorting and compacting systems for aircraft. In particular, this disclosure related to a trash sorting and compacting system for an aircraft.

### BACKGROUND

Aircraft waste may arise, for instance, from beverages being served and consumed in-flight. Simply collecting waste to an aircraft trolley or galley insert results in a plurality of bulky plastic bags, which need to be stored and disposed of safely. Although some aircraft use waste compaction systems, they do not provide for sorting, compacting and storing different materials. The conventional techniques have been considered unsatisfactory for their intended purpose. Therefore, there is an ever-present need for improved systems for more efficient compacting and environmentally friendly collecting and sorting methods on aircraft to facilitate recycling.

### SUMMARY

There is provided a system for sorting and compacting waste on an aircraft, the system includes a waste management system and the waste management system comprises at least one opening to receive waste, at least one crushing chamber configured to crush the waste, and at least one collecting chamber configured to collect the crushed waste provided by the at least one crushing chamber.

The at least one opening may be configured to receive at least one of: a glass bottle, a plastic bottle and/or a metal can, and the waste may comprise at least one of: a glass bottle, a plastic bottle and/or a metal can.

The at least one crushing chamber may include a crushing mechanism. The at least one opening may include a first lid and the system may further comprise a first detector configured to determine if the first lid is closed or not.

The system may further comprise a second detector configured to determine that the waste is at least one of: the glass bottle, the plastic bottle and/or the metal can.

The system may further comprise a second lid configured to allow the crushed waste to pass into the at least one collecting chamber. The second lid may be a grid/mesh.

The system may further comprise a third detector configured to determine if the at least one collecting chamber is full.

The system may further comprise a liquid collecting chamber.

The at least one crushing chamber may include a first surface and a second surface. The first surface may be configured to extend into the at least one crushing chamber such that the waste can be guided over the first surface to the second surface.

The system may further comprise a human-machine interface.

There is also provided an aircraft trolley that includes the system as described above.

The at least one opening may include a can opening and a bottle opening.

There is also provided an aircraft insert including the system described above.

A method for sorting and compacting waste on an aircraft is also provided. The method includes inserting waste into at least one opening provided in a waste management system, crushing the waste in at least one crushing chamber, and collecting the crushed waste in at least one collecting chamber.

The method may include determining, by a first detector, if a first lid of the at least one opening is closed or not. The method may further include determining, by a second detector, that the waste is at least one of: the glass bottle, the plastic bottle and/or the metal can. The method may further include determining if an at least one collecting chamber is full, wherein the at least one collecting chamber collect crushed waste. The method may further include guiding waste over a first surface to a second surface of the at least one crushing chamber.

### BRIEF DESCRIPTION OF THE DRAWINGS

Figure 1 shows an example of an aircraft trolley with an integrated waste system.
Figure 2 shows an example of an aircraft trolley with another example of an integrated waste system.
Figure 3 shows another example of an aircraft trolley with a further example of an integrated waste system.
Figure 4 shows a further example of an integrated waste system.
Figure 5 shows an example of a method of using an aircraft trolley as described in relation to Figures 1 to 4.

### DETAILED DESCRIPTION

Generally, this disclosure relates to sorting, compacting and storing different waste materials. For example, on aircraft, passengers may drink beverages from cans or bottles, and cabin crew may serve passengers drinks in-flight from cans or bottles. It is desirable to reduce the amount of waste produced in-flight and to provide an aircraft trolley or insert to sort and compact waste. In general, this disclosure provides a separate section in the aircraft trolley (or insert) to compact cans and/or to shatter bottles to reduce the waste volume after consumption.

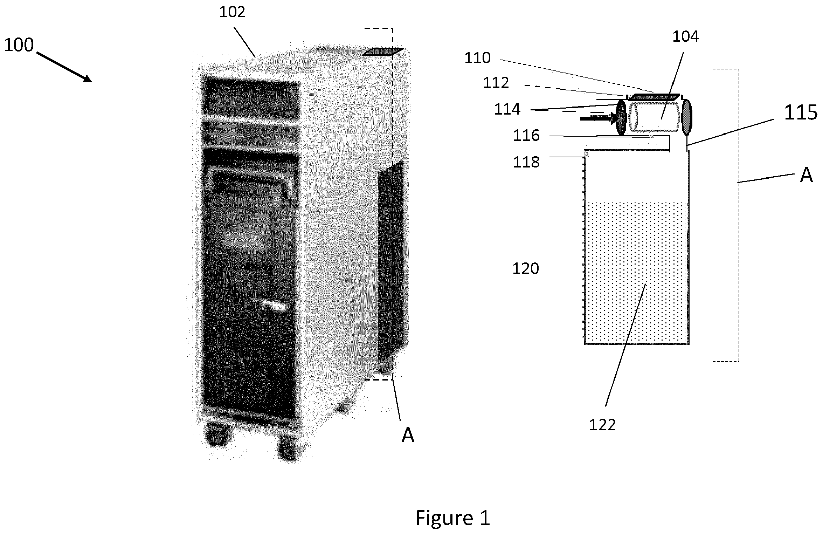

Figure 1 shows an example of an aircraft waste management system 100. The aircraft waste management system 100 includes an aircraft trolley 102. It is to be noted that the aircraft trolley 102 could also be a permanent insert and/or attached to a permanent insert in an aircraft galley and is thus not just limited to the aircraft trolley 102. A cross-section of the aircraft trolley 102 is represented by line A.

Generally, the cross-section A provides a can compacting system that is integrated within the aircraft trolley 102. Although in this disclosure there are shown integrated compacting systems, it is to be understood that they could also be modular to be added to an aircraft trolley and/or a permanent insert in the galley. The aircraft trolley 102 may include a lid 110. The lid 110 may be slideable or hinged in order to open the lid to insert a can 104. The can 104 may be a standard can of up to 330ml size. However, the can may be of any shape and size that is known in the art. Of course, there may not be a lid and, instead, there may be an opening for receiving a can at reference number 110. There may be provided a lid detector 112 to ensure that the lid 110 is closed safely or not. The lid detector 112 may alert the user when the lid 110 is not closed properly. A crushing chamber 114 is provided to receive the can 104. As shown in Figure 1, the crushing chamber 114 is arranged to receive a can 104 in a sideways position. However, it is envisaged that the crushing chamber 114 may also be adapted to receive the can 104 in an upright configuration. There is provided a can detector 116 that can safely detect when a can 104 is inserted into the crushing chamber 114. The can detector 116 may also detect when an item that is not a can has been inserted into the crushing chamber 114 (e.g. an obstruction) and the can detector 116 may inform the user that a can has not been inserted properly or that something other than a can has been inserted into the crushing chamber 114. The user can then remove the material and re-insert a can. Alternatively, the material can be re-directed into a general waste bin (not shown) which may form part of the trolley. Further, in the context of this application, it is expected that the can 104 would be a metal can (e.g. aluminium) and, therefore, the can detector 116 may also detect other compositions and inform the user when a material other than metal has been inserted into the crushing chamber 114. If the can 104 is successfully inserted and it is determined that the can 104 is made from the correct material, the crushing chamber 114 includes a crushing mechanism (not shown) that will apply a force (e.g. in the direction of the arrow) to crush the can 104. This therefore provides an automatic detection and crushing mechanism for cans on aircraft within an aircraft trolley and/or an insert in the galley.

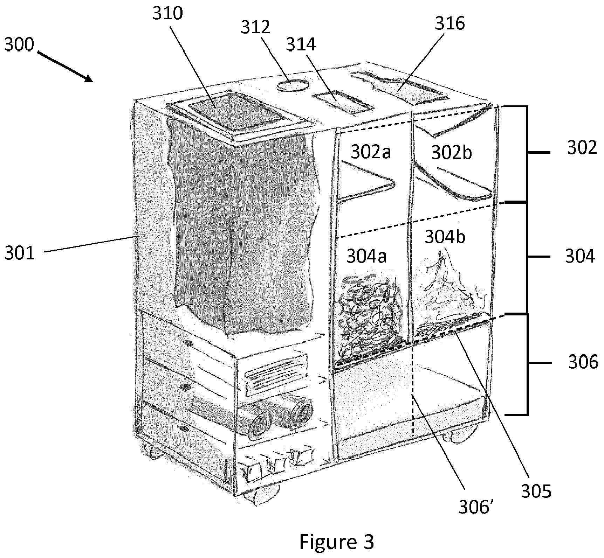

Once the can 104 is crushed, the can 104 may be able to fall into a collecting chamber 120 through a gap 115. Due to the force of gravity, the can 104 will fall into the collecting chamber 120 and the waste 122 is stored in the collecting chamber 120. There may be provided a further detector 118 to determine if the collecting chamber 120 is full. It is envisaged that the collecting chamber 120 may be removed and stored for disposal of the can waste 122. Further, if the collecting chamber 120 becomes full in-flight, it would be possible to remove a full collecting chamber 120 and replace this with an empty collecting chamber 120 for further collection of waste. The full collecting chamber 120 would then be able to be stored until the aircraft has landed and until the general waste is removed by operations teams on the ground. Although not shown in Figure 1, it is also envisaged that there could be a liquid container provided underneath the collecting chamber 120 to collect residual liquid that may be expelled from the crushed cans. This is discussed in more detail below with reference to Figure 3.

Although Figure 1 shows an aircraft waste management system 100 that is directed to metal cans, it is envisaged also, or as an alternative, that the aircraft waste management system 100 could crush (or compact) plastic bottles.

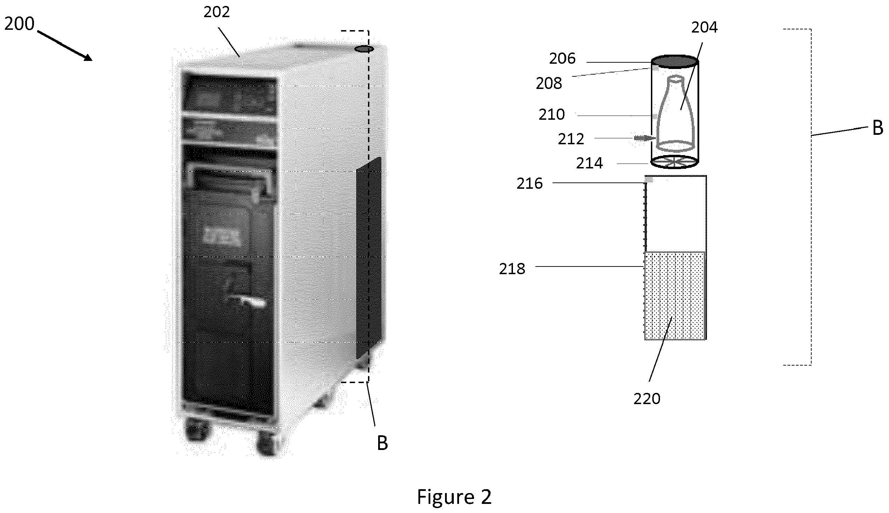

Figure 2 shows an example of an aircraft waste management system 200. The aircraft waste management system 200 includes an aircraft trolley 202. Again, it is to be noted that the aircraft trolley 202 could also be a permanent insert in an aircraft galley and is thus not just limited to the aircraft trolley 202. A cross-section of the aircraft trolley 202 is represented by line B. Generally, the cross-section B provides a glass compacting system that is integrated within the aircraft trolley 202. Once again, although in this disclosure there are shown integrated compacting systems, it is to be understood that they could also be modular to be added to an aircraft trolley and/or a permanent insert in the galley. The aircraft trolley 202 may include a first lid 206. The first lid 206 may be slideable or hinged in order to open the lid to insert a glass bottle 204. The glass bottle 204 may be a standard glass bottle of up to 750ml in size. However, the glass bottle may be of any shape and size that is known in the art. Of course, there may not be a lid and, instead, there may be an opening for receiving a glass bottle at reference number 206. There may be provided a lid detector 208 to ensure that the lid 206 is closed safely or not. The lid detector 208 may alert the user when the lid 206 is not closed properly. A crushing chamber 212 is provided to receive the glass bottle 204. As shown in Figure 2, the crushing chamber 212 is arranged to receive the glass bottle 204 in an upright position. However, it is envisaged that the crushing chamber 212 may also be adapted to receive the glass bottle 204 in a sideways configuration. There is provided a glass bottle detector 210 that can safely detect when a glass bottle 204 is inserted into the crushing chamber 212. The glass bottle detector 210 may also detect when an item that is not a glass bottle has been inserted into the crushing chamber 212 (e.g. an obstruction) and the glass bottle detector 210 may inform the user that a glass bottle has not been inserted properly or that something other than a glass bottle has been inserted into the crushing chamber 212. The user can then remove the material and re-insert a glass bottle. Alternatively, the material can be re-directed into a general waste bin (not shown) which may form part of the trolley. Further, in the context of this application, it is expected that the glass bottle 204 would be formed from glass and, therefore, the glass bottle detector 210 may also detect other compositions and inform the user when a material other than glass has been inserted into the crushing chamber 212. If the glass bottle 204 is successfully inserted and it is determined that the glass bottle 204 is made from the correct material, the crushing chamber 212 includes a crushing mechanism (not shown) that will apply a force (e.g. in the direction of the arrow) to crush (e.g. shatter) the glass bottle 204. This therefore provides an automatic detection and crushing mechanism for glass bottles on aircraft within an aircraft trolley and/or an insert in the galley.

As shown in Figure 2, there may be provided a second lid 214 at the opposite end of the first lid 206 of the crushing chamber 212. The second lid 214 leads to a collection chamber 218. Once the glass bottle 204 is crushed, the second lid 214 may open automatically such that the glass pieces (cullet) 204 is able to fall into the collecting chamber 218. Due to the force of gravity, the glass pieces 204 will fall into the collecting chamber 218 when the second lid 214 is opened and the waste 220 is stored in the collecting chamber 218. Alternatively, the second lid 214 may be a grid or mesh to allow the glass pieces (cullet) fall into the collecting chamber 218. There may be provided a further detector 216 to determine if the collecting chamber 218 is full. It is envisaged that the collecting chamber 218 may be removed and stored for disposal of the glass bottle waste 220. Further, if the collecting chamber 218 becomes full in-flight, it would be possible to remove a full collecting chamber 218 and replace this with an empty collecting chamber 218 for further collection of waste. The full collecting chamber 218 would then be able to be stored until the aircraft has landed and until the general waste is removed by operations teams on the ground. Although not shown in Figure 2, it is also envisaged that there could be a liquid container provided underneath the collecting chamber 218 to collect residual liquid that may be expelled from the crushed bottles. This is discussed in more detail below with reference to Figure 3.

Further, although not shown in Figures 1 and 2, there may be provided a human-machine interface provided on the aircraft trolley 102, 202 to inform the user of the detection of incorrect material and/or the detection that the collecting chambers 120, 218 are full, and/or the detection that any of the lid 110, first lid 206 and/or second lid 214 are not closed properly.

Figure 3 shows a further example of an aircraft waste management system 300. The aircraft waste management system includes an aircraft trolley 300. As above, it is to be noted that the aircraft trolley 301 could also be a permanent insert in an aircraft galley and is thus not just limited to the aircraft trolley 301. The aircraft trolley 301 may include a residual waste chamber 310 for, as an example, food waste. The aircraft trolley 301 may also include a cup chamber 312 for receiving used plastic and/or paper cups. Although not shown in Figure 3, it is envisaged that the cup chamber 312 extends (for example, as a hollow tube) through the aircraft trolley 301 to receive a plurality of plastic and/or paper cups. There is also shown in Figure 3 a can opening 314 for receiving cans and a glass bottle opening 316 for receiving glass bottles. The can opening 314 and the glass bottle opening 316 may also include a lid (not shown) as described in relation to Figures 1 and 2. The aircraft trolley 301 generally includes at least one crushing chamber 302 and at least one collecting chamber 304, as described above in relation to Figures 1 and 2. As shown in Figure 3, there is also provided a liquid collecting chamber 306 to collect residual liquid expelled from crushed cans and/or glass bottles. It is noted that the liquid collecting chamber 306 could extend across both the can and glass bottle waste systems, but could also be separated by a wall 306' for collecting liquid from either the can and/or the glass bottle waste systems. Further, in the example shown in Figure 3, the at least one crushing chamber 302, the at least one collecting chamber 304 and the liquid collecting chamber 306 are integrated into the aircraft trolley. Of course, they may also be provided in a modular fashion. It is envisaged that the at least one collecting chamber 304 and the liquid collecting chamber 306 are removable to remove and dispose of the waste collected therein.

As shown in Figure 3, from the can opening 314, a can (not shown) may fall into the can crushing chamber 302a. Although Figure 3 shows a can crushing chamber 302a that is directed to metal cans, it is envisaged also, or as an alternative, that the can crushing chamber 302a could crush (or compact) plastic bottles. From the glass bottle opening 316, a glass bottle (not shown) may fall into the glass bottle crushing chamber 302b. The crushing chambers 302a and 302b have crushing mechanisms (not shown) and provide the same function as the crushing chamber 114 and the crushing chamber 212 described above in relation to Figures 1 and 2. Once crushed, the can waste enters a can waste collecting chamber 304a and the glass bottle waste enters a glass bottle waste collecting chamber 304b. At the bottom of the can waste collecting chamber 304a and the glass bottle waste collecting chamber 304b, there is provided a filter 305 to allow residual liquid to pass through the filter 305 and into the liquid collecting chamber 306.

Although not shown in Figure 3, the trolley 301 may also include a sink that is connected to the liquid collecting chamber 306. In use, a cabin attendant or user of the trolley 301 would be able to empty the contents of a glass bottle or a metal can into the sink such that liquid waste may be collected in the liquid collecting chamber 306. As an example, liquid waste could refer to waste liquid and/or unused ice cubes.

As with Figures 1 and 2, various detectors (not shown) may be included in the aircraft trolley 301 to determine if the correct material has been inserted into the crushing chamber 302 and also to determine if the at least one lid of the can opening 314 and/or glass bottle opening 316 is safely open or closed. There may also be provided a detector (not shown) in the collecting chamber 304 to determine if the collecting chamber 304 is full. Further, there may also be provided a detector (not shown) in the liquid collecting chamber 306 to determine if the liquid collecting chamber 306 is full. Although not shown in Figure 3, there may be included a human-machine interface to inform the user of the detection of incorrect material and/or the detection that the collecting chamber 304 and/or the liquid collecting chamber 306 are full, and/or the detection that the lid of the at least one can opening 314 and/or glass bottle opening 316 is not closed and/or open safely.

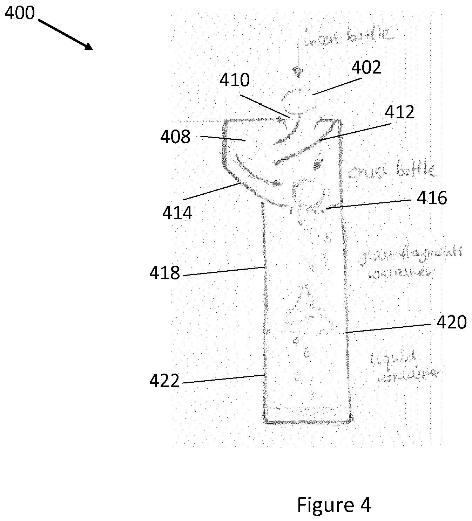

Figure 4 shows a further example of a waste management system 400. The waste management system 400 may include a crushing chamber 408. The crushing chamber may include a first surface 412 to receive a glass or plastic bottle and/or metal can 402. The first surface 412 extends into the crushing chamber 408 such that the glass or plastic bottle and/or metal can can roll to a second surface 414. The first surface 412 may act as a first lid and may be hinged to an inner surface of the crushing chamber 408 such that the first lid may be pushed down on insertion of a glass bottle. The second surface 414 then guides the glass or plastic bottle and/or metal can to a second lid 416. The first surface 412 and the second surface 414 therefore act as a 'marble-run' type configuration to guide the glass bottle 402 safely to a position on the second lid 416 to be crushed. The crushing chamber 408 includes a crushing mechanism (not shown) to crush the glass or plastic bottle and/or metal can 402 when it is determined that the glass or plastic bottle and/or metal can 402 is safely adjacent to the second lid 416. Once crushed, the second lid 416 may open to allow the glass, plastic and/or can waste to fall into a collecting chamber 418. At the bottom of the collecting chamber 418 there may be provided a filter 420 to allow residual liquid waste to filter through to a liquid collecting chamber 422. In the cases where glass bottles are inserted into the crushing chamber 408, the second lid 416 may be a grid or mesh to allow the glass pieced to fall into the collecting chamber 418.

As with Figures 1, 2 and 3, various detectors (not shown) may be included in the waste management system 400 to determine if the correct material has been inserted into the crushing chamber 408 and also to determine if the first lid 412 lid is safely closed or not. There may also be provided a detector (not shown) in the collecting chamber 418 to determine if the collecting chamber 418 is full. Further, there may also be provided a detector (not shown) in the liquid collecting chamber 422 to determine if the liquid collecting chamber 422 is full. Although not shown in Figure 4, there may be included a human-machine interface to inform the user of the detection of incorrect material and/or the detection that the collecting chamber 422 is full, and/or the detection that the first lid 412 is not closed and/or open safely.

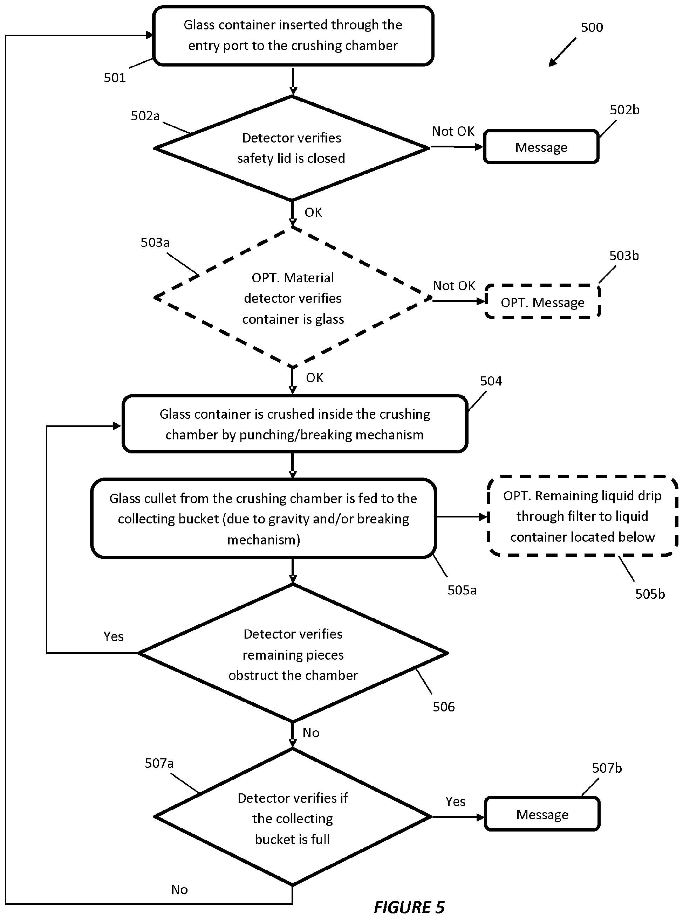

Figure 5 shows an example of a method 500 of using a waste management system on an aircraft - for example those described above in relation to Figures 1 to 4. In the example method 500 of Figure 5, the term 'glass container' can refer to a glass bottle. Of course, the glass container could be a metal can or plastic in line with the examples shown in Figures 1 to 4.

Step 501 allows a user to insert a waste item (e.g. glass bottle) into the crushing chamber. For example, a waste item can be provided through at least one opening to a crushing chamber. A detector verifies that a safety lid is closed at step 502a. If the safety lid is not closed (indicated by 'Not OK'), a message (e.g. audio and/or visual message in the trolley) is provided to the user at step 502b. If the detector does verify that the safety lid is closed at step 502a (indicated by 'OK'), then the method optionally moves to step 503a where a detector verifies if the waste item is glass (or metal or plastic). If the waste item is not verified as glass (or metal or plastic), the method moves to optional step 503b to provide a message (e.g. audio or visual message) to the user such that the waste item can be removed or re-directed to general waste. If the waste item is verified as glass (or metal or plastic), then the method may move to step 504. Of course, since method steps 503a and 503b are optional, the method may move from 502a to step 504 without verifying the material of the waste item.

At step 504, the waste item (e.g. glass/plastic bottle, metal can) is crushed inside the crushing chamber by a crushing mechanism. Step 505a provides that the crushed waste (e.g. crushed glass, crushed metal can or crushed plastic bottle) passes into the collecting chamber (e.g. due to gravity or by the crushing mechanism). Optional step 505b is included such that any remaining liquid during crushing may enter a liquid collecting chamber. At step 506, a detector determines if remaining crushed waste is obstructing the crushing chamber. If it is determined that crushed waste remains in the crushing chamber, the method returns to step 504 to repeat steps 504, 505a, optionally 505b, and again determines if remaining crushed waste is obstructing the crushing chamber. Is it is determined at step 506 that no remaining crushed waste is obstructing the crushing chamber, the method moves on to step 507a where it is determined if the collecting chamber is full (e.g. full of crushed waste). If the collecting chamber is full, step 507b will alert (e.g. with an audio and/or visual alert) the user that the collecting chamber is full. The user may then replace the full collecting chamber with an empty collecting chamber, or retire the trolley from use. If it is determined that the collecting chamber is not full at step 507a then the method returns to step 501 to repeat the overall method 500.

Although this disclosure has been described in terms of preferred examples, it should be understood that these examples are illustrative only and that the claims are not limited to those examples. Those skilled in the art will be able to make modifications and alternatives in view of the disclosure which are contemplated as falling within the scope of the appended claims.

## Claims

1. A system for sorting and compacting waste on an aircraft, the system comprising:
a waste management system (100, 200, 300, 400), the waste management system (100, 200, 300, 400) comprising:
at least one opening (110, 206, 314, 316, 410) to receive waste (104, 204, 402);
at least one crushing chamber (114, 212, 302, 408) configured to crush the waste;
at least one collecting chamber (120, 218, 304, 418) configured to collect the crushed waste provided by the at least one crushing chamber.

2. The system of claim 1, wherein the at least one opening is configured to receive at least one of: a glass bottle (204, 402), a plastic bottle and/or a metal can (104), and wherein the waste comprises at least one of: a glass bottle (204, 402), a plastic bottle and/or a metal can (104).

3. The system of claim 1 or 2, wherein the at least one crushing chamber (114, 212, 302, 408) includes a crushing mechanism.

4. The system of any preceding claim, wherein the at least one opening (110, 206, 314, 316, 410) includes a first lid (110, 206), and wherein the system further comprises a first detector (112, 208) configured to determine if the first lid (110, 206) is closed or not.

5. The system of any of claims 2-4, wherein the system further comprises a second detector (116, 210) configured to determine that the waste is at least one of: the glass bottle (204, 402), the plastic bottle and/or the metal can (104).

6. The system of claim 4 or 5, wherein the system further comprises a second lid (214, 416) configured to allow the crushed waste to pass into the at least one collecting chamber (120, 218, 304, 418).

7. The system of claim 6, wherein the second lid (214, 416) is a lid or a grid/mesh.

8. The system of any preceding claim, wherein the system further comprises a third detector (118, 216) configured to determine if the at least one collecting chamber (120, 218, 304, 418) is full.

9. The system of any preceding claim, wherein the system further comprises a liquid collecting chamber (306, 422).

10. The system of any preceding claim, wherein the at least one crushing chamber (114, 212, 302, 408) includes a first surface (412) and a second surface (414), wherein the first surface (412) is configured to extend into the at least one crushing chamber (114, 212, 302, 408) such that the waste can be guided over the first surface (412) to the second surface (414).

11. The system of any preceding claim, wherein the system further comprises a human-machine interface.

12. An aircraft trolley including the system of any preceding claim.

13. The aircraft trolley of claim 11, wherein the at least one opening includes a can opening (314) and a bottle opening (316)

14. An aircraft insert including the system of any of claims 1-11.

15. A method for sorting and compacting waste on an aircraft, the method comprising:
inserting waste into at least one opening provided in a waste management system;
crushing the waste in at least one crushing chamber;
collecting the crushed waste in at least one collecting chamber.
